## Europäisches Patentamt
## European Patent Office
## Office européen des brevets

(19)

(11) Veröffentlichungsnummer: **0 246 416**
**B1**

(12) **EUROPÄISCHE PATENTSCHRIFT**

(45) Veröffentlichungstag der Patentschrift:
**27.12.89**

(21) Anmeldenummer: **87103883.2**

(22) Anmeldetag: **17.03.87**

(51) Int. Cl.⁴: **F 16 D 1/08,** B 60 G 21/04,
F 16 B 21/20

(54) Vorrichtung zum starren Verbinden eines auf einer Welle angeordneten Bauelementes.

(30) Priorität: **17.05.86 DE 3616763**

(43) Veröffentlichungstag der Anmeldung:
**25.11.87 Patentblatt 87/48**

(45) Bekanntmachung des Hinweises auf die Patenterteilung:
**27.12.89 Patentblatt 89/52**

(84) Benannte Vertragsstaaten:
**DE FR GB IT**

(56) Entgegenhaltungen:
**DE-A-1 919 189**
**FR-A-1 232 031**
**GB-A-798 142**
**GB-A-913 812**
**GB-A-2 131 916**
**US-A-2 270 571**
**US-A-3 819 289**

(73) Patentinhaber: **Dr.Ing.h.c. F. Porsche**
**Aktiengesellschaft, Porschestrasse 42, D-7000**
**Stuttgart 40 (DE)**

(72) Erfinder: **Becker, Dietmar, Dipl.- Ing. FH,**
**Gmuender Weg 3, D-7146 Ludwigsburg- Tamm**
**(DE)**

LIBER, STOCKHOLM 1989

## Beschreibung

Die Erfindung bezieht sich auf eine Vorrichtung nach dem Oberbegriff des Anspruchs 1.

Aus der US-A-3 819 289, aus der die Merkmale aus dem Oberbegriff des Anspruchs 1 bekannt sind, ist die Verbindung eines Hülsenelements auf einem Wellenendteil über einen Spannring bekannt. Dieser nimmt zwischen sich und einer konischen Gegenfläche an der Welle das Hülsenelement auf, welches entsprechend der gegenüberstehenden Fläche am Spannring und an der Welle ausgebildete konische Spannflächen aufweist, die korrespondierend zu der Gegenfläche am Spannring und an der Welle angeordnet sind. Beim Aufschrauben des Spannrings auf die Welle wird das Hülsenelement zwischen der Welle und dem Spannring eingeklemmt.

Aufgabe der Erfindung ist es, eine Vorrichtung zum starren Verbinden eines Bauelementes mit einer Welle so zu verbessern, daß ein sicheres Verspannen in einfacher Weise erfolgt und auch ein schnelles Auswechseln sowie eine Verstellung der zu verbindenden Bauteile gewährleistet ist.

Diese Aufgabe wird erfindungsgemäß durch die kennzeichnenden Merkmale des Anspruchs 1 gelöst. Weitere vorteilhafte Ausbildung der Erfindung beinhalten die Unteransprüche.

Die mit der Erfindung hauptsächlich erzielten Vorteile bestehen darin, daß über einen Spannring und eine Druckscheibe beim Anziehen einer Zentralschraube gleichzeitig eine kombinierte axiale und radiale Verspannung des auf der Welle bzw. dem Stabilisatorquerrohrs gehaltenen Bauteiles bzw. Biegehebels erfolgt. Durch die gezielte radiale Verspannung über das in der Bohrung des Wellenendteils angeordneten einen Teils des Spannringes und der Druckscheibe, wird ein mögliches Spiel zur Welle am aufgesetzten Bauteil angebaut. Es erfolgt somit eine direkte Anpressung der gegenüberstehenden Flächen und es wird eine "Lose" zwischen den zu verbindenden Teilen vermieden. Dies ist insbesondere bei einem Stabilisator erforderlich, damit die Federungsbewegungen des Rades einer Fahrzeugseite auf das Rad der anderen Fahrzeugseite ohne Spiel übertragbar ist. Ebenso ist dies bei anderen Anwendungen erforderlich, z. B. bei Verbindungen einer Kurbelwelle und einer Schwungscheibe, zwischen einer Gelenkwelle und einer Radnabe und bei einer Zentralschraube für eine Felge und bei Werkzeugaufnahmen.

Die Druckscheibe ist zur Erzielung einer radialen Spannwirkung mit entsprechend axialen Durchdringungen versehen, so daß bei einem Anziehen der Zentralschraube die Segmente somit radial nach außen gedrückt werden.

Die weitere axiale Befestigung über das äußere Spannteil ergibt eine gleichmäßige umfangsseitige Verspannung aufgrund einer zentrisch im Spannring angeordneten Zentralschraube, die innerhalb der Welle in der Druckscheibe befestigt wird. Durch diese Anordnung der Zentralschraube wird gleichzeitig erreicht, daß z. B. die Schwenkachse des Stabilisators durch die Zentralschraube verläuft.

Die Befestigung über den Spannring ermöglicht ein schnelles Auswechseln z. B. des Biegehebels bei einem Stabilisator, aber auch dessen einfaches, stufenloses Einstellen.

Bei der Ausbildung des Wellenendteiles mit einer Außenverzahnung und des aufgesetzten Bauteiles mit einer Innenverzahnung wird eine formschlüssige Verbindung geschaffen, die bei relativ großen Stoßkräften eine zusätzliche Verdrehsicherung zum Radial-Spannteil ergibt. Zum Vermindern des Spiels zwischen den Verzahnungen dient das innere Radial-Spannteil, das das Wellenendteil durch Anziehen der Zentralschraube entsprechend nach außen drückt.

Durch eine freie axiale Lage der Klemmebene aufgrund einer beliebigen Anordnung des Spannringes bzw. des Druckringes wird besonders bei der Ausführung mit Verzahnungen der Kraftfluß optimiert.

Durch eine definiert abgestimmte Ausbildung des Spannringes ist eine Anpassung an unterschiedliche Belastung möglich, wobei eine solche Anpassung z. B. durch eine Veränderung der Radialschlitze bzw. Nuten, der Anstellwinkel der Segmente sowie durch eine abgestimmte Passungswahl zwischen der inneren Umfangsfläche der Bohrung des Wellenendteiles sowie der äußerem Umfangsfläche des Radial-Spannteils und der Größe der Konusflächen erzielbar wäre.

Ein Ausführungsbeispiel der Erfindung ist in der Zeichnung dargestellt und wird im folgenden näher beschrieben.

Es zeigt

Fig. 1 eine Draufsicht auf einen Stabilisator mit einem Spannring und einer Druckscheibe,

Fig. 2 ein Wellenendteil bzw. ein Stabilisator-Endteil, teilweise im Schnitt mit innenliegend angeordneter Druckscheibe,

Fig. 3 eine Seitenansicht des Wellenendteiles mit Druckscheibe gemäß Fig. 2,

Fig. 4 eine Vorderansicht des Spannringes teilweise im Schnitt und

Fig. 5 eine Seitenansicht des Spannringes gemäß Fig. 4.

Auf einer Welle 1 ist an einem Wellenendteil 2 ein Bauelement 3 über einen ggfs. aus Titan bestehenden Spannring 4 gehalten. Dieser umfaßt ein Axial-Spannteil 5 und ein mit diesem einstückig und im Durchmesser kleineren Radial-Spannteil 6.

Zwischen dem Spannring 4 und einem Absatz 7 der Welle 1 ist eine Hülse 3a des Bauelementes 3 eingeklemmt gehalten, wobei Konusflächen 8, 9 am Spannring 4 und Absatz 7 der Welle 1 vorgesehen sind, mit denen Konusflächen 10, 11 an der Hülse 3a korrespondieren.

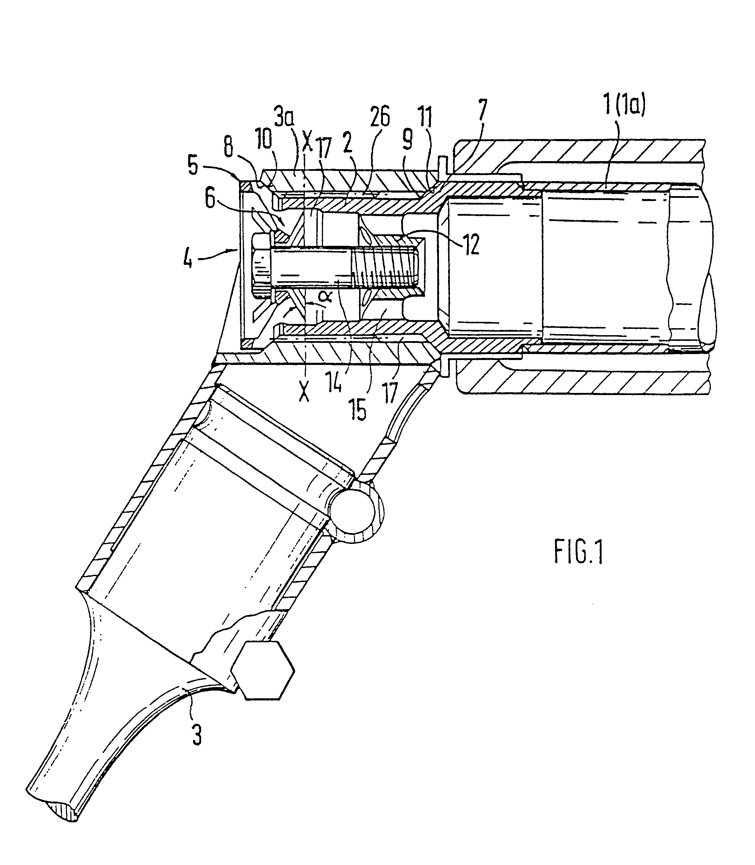

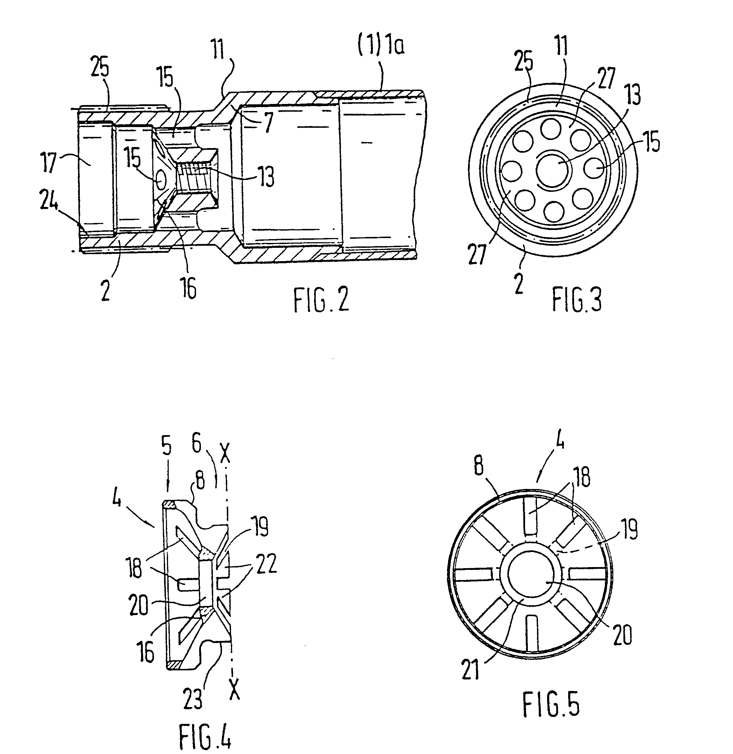

Das Bauelement 3 ist in Fig. 1 als Biegehebel für einen Stabilisator ausgebildet, wobei dieser als Position 1a und der Biegehebel als Position 3 bezeichnet wird. Das querverlaufende Teil des Stabilisators 1a ist als Rohr ausgeführt und in einem umgebenden Tragrohr gehalten, das Fahrzeugaufbau befestigt wird, was nicht näher dargestellt ist.

Zum Festsetzen des Spannringes 4 an der Welle 1 ist eine Druckscheibe 12 in einer Bohrung 17 des Stabilisators 1a vorgesehen, wobei diese vorzugsweise einstückig mit dem Stabilisator 1a ausgeführt ist. Die Druckscheibe 12 weist eine Gewindebohrung 13 für eine Zentralschraube 14 auf und ist mit in Längsrichtung des Stabilisators 1a verlaufenden axialen Durchdringungen 15 versehen, die zwischen sich Segmente 27 bilden.

Das Axial-Spannteil 5 des Ringes 4 ist topfförmig ausgebildet, an dessen Bodenfläche 16 sich das Radial-Spannteil 6 mit einem geringeren Durchmesser anschließt, der etwa dem der Bohrung 17 des Wellenendteiles 2 entspricht.

Die beiden Spannteile 5 und 6 weisen über den Umfang verteilte Radialschlitze 18 und Radialnuten 19 auf, wobei die Schlitze 18 die Bodenfläche 16 des Axial-Spannteiles 5 durchdringen und im Radial-Spannteil 6 als Nuten 19 auslaufen und ein die Bohrung 20 für die Zentralschraube 14 umgebener Kranz 21 stehenbleibt.

Die Nuten 19 bilden im inneren Spannteil 6 zwischen sich elastisch verstellbare, zahnförmig ausgeführte Segmente 22, deren umfangsseitige Spannflächen 23 in Kontakt mit der gegenüberstehenden inneren Umfangsfläche 24 der Bohrung 17 stehen. Im Ausführungsbeispiel gemäß Fig. 1 sind die Segmente 22 im Beispiel unter eine Winkel von 30˚ zu einer Ebene X - X angestellt, wobei je nach der zu erzielenden radialen Spannkraft dieser Winkel bei der Herstellung des Spannringes 4 veränderbar ist.

Wie das Ausführungsbeispiel gemäß Fig. 1 zeigt, ist auf dem Wellenendteil 2 eine Außenverzahnung 25 und in der Hülse 3a eine Innenverzahnung 26 eingearbeitet. Diese Verzahnungen 25 und 26 können in Abhängigkeit vom Anwendungsfall auch entfallen.

Zum starren Verbinden des Biegehebels 3 mit dem Querrohr des Stabilisators 1a wird der Spannring 4 mit seinem Radial-Spannteil 6 in die Bohrung 17 gesteckt, wobei die Hülse 3a des Biegehebels 3 zwischen den Konusflächen 8, 9 gehalten wird. Durch ein Anziehen der Zentralschraube 14 entgegen der Druckscheibe 12 wird das Radial-Spannteil 6 so ausgeweitet, daß die Segmente 22 sich radial nach außen bewegen und eine gewisse Aufweitung des Wellenendteils 2 bewirken, das sich hierdurch gegen die Hülse 3a preßt. Gleichzeitig werden auch die Segmente 27 der Druckscheibe 12 geringfügig radial nach außen verstellt, so daß auch in diesem Bereich des Wellenendteils 2 eine gewisse Aufweitung erfolgt. Über die Konusflächen 8, 9 am Spannring 4, am Absatz 7 des Wellenendteiles 2 sowie über die weiteren Konusflächen 10, 11 an der Hülse 3a wird ein axiales Festsetzen des Biegehebels 3 auf der Welle erreicht.

## Patentansprüche

1. Vorrichtung zum starren Verbinden eines auf einer Welle angeordneten Bauelementes, insbesondere eines an einem Stabilisator (1a) für ein Kraftfahrzeug gehaltenen Biegehebels (3) über einen Spannring (4), wobei der Spannring das Bauelement über an diesem angeordnete Konusflächen sowie über Konusflächen am Wellenendteil (2) und Konusflächen am Spannring (4) kraftschlüssig zusammenhält und eine axiale und radiale Verspannung zwischen den Teilen bewirkt, *dadurch gekennzeichnet,* daß der Spannring (4) ein in einem Wellenendteil (2) angeordnetes inneren Radial-Spannteil (6) und ein im Durchmesser größeres äußeres Axial-Spannteil (5) umfaßt und der Spannring (4) über eine Zentralschraube (14) mit der Welle (1; 1a) verbunden ist, auf der zwischen Konusflächen (8, 9) des Wellenendteiles (2) und dem Axial-Spannteil (5) ein mit korrespondierenden Konusflächen (10, 11) versehenes Bauelement (3, 3a) axial gehalten wird und daß das Radial-Spannteil (6) elastisch verstellbare zahnförmige Segmente (22) aufweist, deren umfangsseitige Spannflächen (23) unmittelbar einer inneren Umfangsfläche (24) einer Bohrung (17) im Wellenendteil (2) zugerichtet sind und dieses radial verspannend beaufschlagen.

2. Vorrichtung nach Anspruch 1, *dadurch gekennzeichnet,* daß das Bauelement (3) als Biegehebel ausgebildet ist, der mit dem am Fahrzeugaufbau befestigten und querverlaufend angeordneten Stabilisatorteil (1a) an mindestens einer seiner freien Enden über den Spannring (4) befestigt ist.

3. Vorrichtung nach den Ansprüchen 1 oder 2, *dadurch gekennzeichnet,* daß die Zentralschraube (14) in einer in der Welle (1) (Stabilisatorteil 1a) gehaltenen Druckscheibe (12) befestigt ist, die mehrere in Längsrichtung der Welle (1) verlaufende, axiale Durchdringungen (15) aufweist.

4. Vorrichtung nach den Ansprüchen 1 oder 2, *dadurch gekennzeichnet,* daß das Axial-Spannteil (5) topfförmig ausgeführt ist und in seiner Bodenfläche (16) eine durch das Radial-Spannteil (6) geführte Bohrung (20) für die Zentralschraube (14) aufweist.

5. Vorrichtung nach Anspruch 4, *dadurch gekennzeichnet,* daß in den beiden Spannteilen (5, 6) über den Umfang verteilte, die Bodenfläche (16) des äußeren Spannteiles (5) durchdringende Radialschlitze (18) vorgesehen sind, die im inneren Spannteil (6) als Radialnuten (19) in einem um die Bohrung (20) verbleibenden Kranz (21) auslaufen.

6. Vorrichtung nach Anspruch 5, *dadurch gekennzeichnet,* daß die Segmente (22) unter ei-

nem Winkel (α) zu einer Ebene (X - X) angestellt sind.

7. Vorrichtung nach einem oder mehreren der vorhergehenden Ansprüche, *dadurch gekennzeichnet*, daß das Wellenendteil (2) eine Außenverzahnung (25) und das aufgesetzte Bauelement (3) eine mit dieser Verzahnung (25) korrespondierende Innenverzahnung (26) aufweist.

8. Vorrichtung nach einem oder mehreren der vorhergehenden Ansprüche, *dadurch gekennzeichnet*, daß der Spannring (4) aus Titan besteht.

**Claims**

1. A device for rigidly connecting a component arranged on a shaft, in particular a bending lever (3) held on a stabiliser (1a) for a motor vehicle, via a clamping ring (4), wherein the clamping ring clamps the component together via cone faces arranged thereon and via cone faces at the shaft end (2) and cone faces on the clamping ring (4) and produces axial and radial stress between the parts, *characterised* in that the clamping ring (4) comprises an internal radial clamping part (6) arranged in a shaft end (2) and an external axial clamping part (5) of greater diameter, and the clamping ring (4) is connected via a central screw (14) to the shaft (1; 1a) on which a component (3, 3a) provided with corresponding cone faces (10, 11) is held axially between cone faces (8, 9) of the shaft end (2) and the axial clamping part (5), and in that the radial clamping part (6) has resiliently adjustable tooth-shaped segments (22) whose peripheral clamping faces (23) point directly to an internal peripheral face (24) of a passage (17) in the shaft end (2) and subject it to a radial stress.

2. A device according to Claim 1, *characterised* in that the component (3) is constructed as a bending lever which is fixed to the stabiliser part (1a) fixed on the vehicle body and arranged to run transversely at at least one of its free ends via the clamping ring (4).

3. A device according to Claims 1 or 2, *characterised* in that the central screw (14) is fixed in a pressure disc (12) held in the shaft (1) (stabiliser part 1a) and having a plurality of axial openings (15) extending in the longitudinal direction of the shaft (1).

4. A device according to Claims 1 or 2, *characterised* in that the axial clamping part (5) is pot-shaped in construction and, in its base (16), has a passage (20) passing through the radial clamping part (6) for the central screw (14).

5. A device according to Claim 4, *characterised* in that radial slots (18) which are distributed over the periphery and penetrate the base (16) of the outer clamping part (5) are provided in the two clamping parts (5, 6), the radial slots (18) issuing in the internal clamping part (6) as radial grooves (19) in a crown (21) remaining round the passage (20).

6. A device according to Claim 5, *characterised* in that the segments (22) are adjusted at an angle (α) to a plane (X - X).

7. A device according to one or more of the preceding claims, *characterised* in that the shaft end (2) has external teeth (25) and the positioned component (3) has internal teeth (26) mating with these teeth (25).

8. A device according to one or more of the preceding claims, *characterised* in that the clamping ring (4) is composed of titanium.

**Revendications**

1. Dispositif pour relier rigidement un élément de construction disposé sur un arbre, en particulier un levier coudé (3) porté sur un stabilisateur (1a) d'un véhicule automobile, par l'intermédiaire d'une bague de serrage (4), la bague de serrage maintenant l'élément de construction assemblé par ajustement de forme sur la bague de serrage, par l'intermédiaire de surfaces coniques disposées sur l'élément de construction, ainsi que de surfaces coniques disposées sur la partie d'extrémité d'arbre (2) et de surfaces coniques disposées sur la bague de serrage (4) et provoquant un serrage axial et radial entre les parties, *caractérisé* en ce que la bague de serrage (4) comprend une partie de serrage radial (6) intérieure disposée dans une partie d'extrémité d'arbre et une partie de serrage axial (5) extérieure d'un diamètre supérieur et la bague de serrage (4) étant reliée, par l'intermédiaire d'une vis centrale (14), à l'arbre (1; 1a) sur lequel un élément de construction (3, 3a) pourvu de surfaces coniques (10, 11) correspondantes est maintenu axialement, entre les surfaces coniques (8, 9) de la partie d'extrémité d'arbre (2) et la partie de serrage axiale (5), et en ce que la partie de serrage radial (6) présente des segments (22) élastiques, en forme de dents et réglables, dont les surfaces de serrage (23) situées côté périphérie sont tournées directement vers une surface périphérique interne (24) d'un alésage (17) situé dans la partie d'extrémité d'arbre (2) et sollicitent ce dernier en le serrant radialement.

2. Dispositif selon la revendication 1, *caractérisé* en ce que l'élément de construction (3) est réalisé sous la forme d'un levier coudé qui est fixé à la partie de stabilisateur (1a) fixée sur la carrosserie du véhicule et disposée en s'étendant transversalement, sur au moins l'une de ses extrémités libres, sur la bague de serrage (4).

3. Dispositif selon la revendication 1 ou 2, *carac-*

térisé en ce que la vis centrale (14) est fixée dans une rondelle de pression (12) maintenue dans l'arbre (1) (partie de stabilisateur 1a) et présentant plusieurs passages traversants axiaux (15) s'étendant en direction longitudinale de l'arbre (1).

4. Dispositif selon la revendication 1 ou 2, caractérisé en ce que la partie de serrage axial (5) est réalisée en forme de pot et présente, dans sa surface de fond (16) et pour sa vis centrale (14) un alésage (20) passant par la partie de serrage radial (6).

5. Dispositif selon la revendication 4, caractérisé en ce que, dans les deux parties de serrage (5, 6), des fentes radiales (18) réparties sur la périphérie et traversant la surface de fond (16) de la partie de serrage extérieure (5) sont prévues, fentes s'étendant dans la partie de serrage intérieure (6), en servant de gorges radiales (19), dans une couronne (21) subsistant autour de l'alésage (20).

6. Dispositif selon la revendication 5, caractérisé en ce que les segments (22) sont disposés en faisant un angle ($\alpha$) par rapport à un plan (X - X).

7. Dispositif selon l'une ou plusieurs des revendications précédentes, caractérisé en ce que la partie d'extrémité d'arbre (2) présente une denture extérieure (25) et l'élément de construction (3) appliqué dessus présente une denture intérieure (26) correspondant à cette denture (25).

8. Dispositif selon l'une ou plusieurs des revendications précédentes, caractérisé en ce que la bague de serrage (4) se compose de titane.

FIG.1

FIG.2

FIG.3

FIG.4

FIG.5